# EUROPEAN PATENT SPECIFICATION

(11) **EP 4 175 518 B1**
(45) Date of publication and mention of the grant of the patent: **10.04.2024**
(21) Application number: 21737202.8
(22) Date of filing: 05.07.2021
(51) Int. Cl.: A47J 31/52, A47J 31/46

(54) **A HOT BEVERAGE BREWING APPARATUS**
BRÜHVORRICHTUNG FÜR HEISSE GETRÄNKE
APPAREIL DE PRÉPARATION DE BOISSONS CHAUDES

(30) Priority: 03.07.2020 NL 2025985
(43) Date of publication of application: 10.05.2023
(73) Proprietor: Bravilor Bonamat BV, 1704 RD Heerhugowaard (NL)
(72) Inventor: BREEBAART, Nico Simon, 1704 RD Heerhugowaard (NL); WELKAMP, Merlijn, 1704 RD Heerhugowaard (NL); TEUNISSEN, Kuno, 1704 RD Heerhugowaard (NL)
(74) Representative: van Breda, Jacobus
(86) International application number: PCT/NL2021/050426
(87) International publication number: WO 2022/005294

(56) References cited:
- EP-A1- 2 107 242
- EP-A1- 2 452 597
- EP-A1- 3 135 162
- EP-B1- 2 107 242
- AU-A1- 2008 202 438

## Description

The invention relates to a hot beverage brewing apparatus comprising a water input, a water pump connected to the water input and provided with a first control loop for controlling a flow generated by the water pump, a thermal heater connected to the water pump and provided with a second control loop for controlling the heating by the thermal heater of the water supplied by the water pump, and a brewer unit connected to the thermal heater with a first outlet for the hot beverage.

EP-A-3 135 162 discloses such a hot beverage brewing apparatus, as well as EP-A-2107242.

It is an object of the invention to expand the application possibilities of the known hot beverage brewing apparatus at limited costs and reduced CO2 footprint.

The hot beverage brewing apparatus of the invention is provided with a second outlet for steam, and the first control loop for controlling the flow generated by the water pump comprises a zero cross detection circuit connected to a power input line of a power circuit which provides power to the water pump to detect and select one of the two halves of a power cycle present on the power line, said control loop further comprising a driving circuit cooperating with the zero cross detection circuit, and said control loop further comprising a switch in the power circuit of the water pump, which switch is driven by the driving circuit and which is arranged to repetitiously switch the switch on and off so as to provide a predefined percentage of the power available on the powerline in the selected half of the power cycle to the water pump, and the driving circuit is arranged to maintain the switch in the on position for a selected period of time in the non-selected half of the power cycle present on the powerline, so as to enable that in said second half electrical current through the water pump restores to zero.

Accordingly it is possible to vary the capacity of the water pump over the entire range between 0% and 100% electrical power. This arrangement also provides that electrical current spikes and RF emissions and losses are effectively prevented. This makes the hot beverage brewing apparatus of the invention particularly usable also in domestic, commercial and light industrial environments. Moreover an acoustic noise reduction of at least 10 dB is achieved when operating the electrical pump according to the invention, which further promotes the use of the apparatus in the domestic environment.

According to the invention the single function hot beverage brewing apparatus of the prior art, is completed with a second function, i.e. the possibility to provide hot steam in addition to providing the hot beverage without the need to add an additional water pump or heating facilities. Accordingly in one housing it is possible to provide both the hot beverage brewing facility and the facility to provide hot water or steam.

The invention will hereinafter be further elucidated with reference to the drawing of control schemes of a hot beverage brewing apparatus according to the invention that is not limiting as to the appended claims.

In the drawing:
- figure 1 shows a control scheme for controlling the water pump of a hot beverage brewing apparatus of the invention;
- figure 2 shows a control scheme according to what is shown in figure 1 with less detail, but completed with the control scheme for the steam supply with the apparatus of the invention.

Whenever in the figures the same reference numerals are applied, these numerals refer to the same parts.

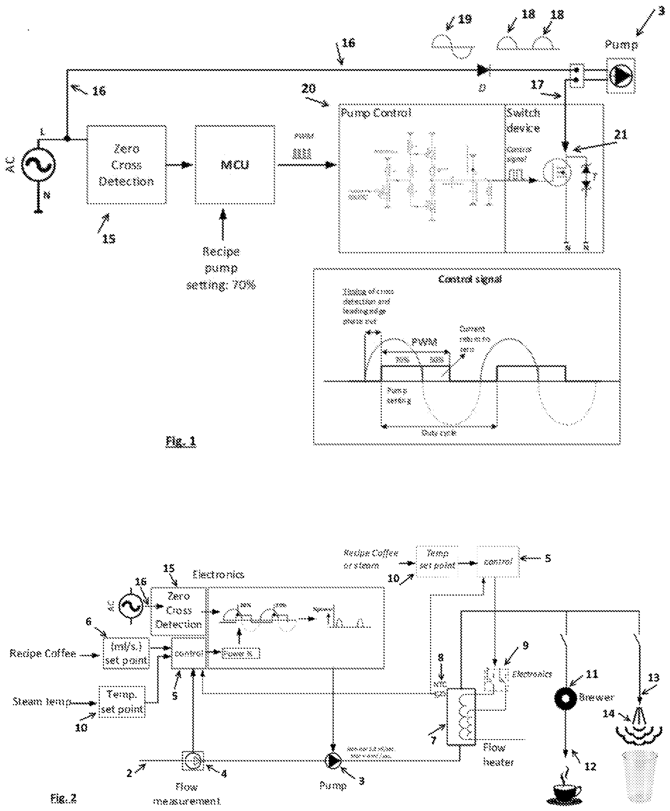

Turning first to figure 2 which depicts a control scheme of a hot beverage brewing apparatus 1 according to the invention, this figure further schematically shows that the apparatus comprises a water input 2, a water pump 3 connected to the water input 2 and provided with a first control loop for controlling a flow generated by the water pump 3. This first control loop comprises a flow measurement device 4, a controller 5, and of course the water pump 3 itself. A setpoint 6 for waterflow can be provided to the controller 5 in accordance with a selected recipe, for instance for coffee.

Figure 2 further shows that the apparatus 1 comprises a thermal heater 7 connected to the water pump 3 and that this thermal heater 7 is provided with a second control loop for controlling the heating by the thermal heater 7 of the water supplied by the water pump 3. This second control loop comprises a thermistor 8 for measuring the temperature, the earlier mentioned controller 5 which for clarity of the figure is repeated in dashed lines, and electronics 9 providing power to the thermal heater 7. A temperature setpoint 10 can be provided to the controller 5.

Further figure 2 shows that there is a brewer unit 11 connected to the thermal heater 7 with a first outlet 12 for the hot beverage. So far the features that are mentioned in this figure description concerning the hot beverage brewing apparatus 1 of the invention are known from the prior art. The additional and novel feature according to the invention is that the thermal heater 7 is provided with a second outlet 13 for steam 14.

Other aspects of the invention are discussed in the following, also making reference to figure 1.

The hot beverage brewing apparatus 1 of the invention preferably has the feature that the first control loop for controlling the flow generated by the water pump 3 comprises a zero cross detection circuit 15 connected to a power input line 16 of a power circuit 17 which provides power to the water pump 3 to detect and select one of the two halves 18 of a power cycle 19 present on the power line 16. The control loop further comprising a driving circuit 20 cooperating with the zero cross detection circuit 15, and said control loop further comprises a switch 21 in the power circuit 17 of the water pump 3, which switch 21 is driven by the driving circuit 20 and which is arranged to repetitiously switch the switch 21 on and off so as to provide a predefined percentage of the power available on the powerline 16 in the selected half 18 of the power cycle 19 to the water pump 3.

Preferably the driving circuit 20 is further arranged to maintain the switch 21 in the on position for a selected period of time in the non-selected half of the power cycle 19 present on the powerline 16, so as to enable that in said second half electrical current through the water pump 3 restores to zero.

Although the invention has been discussed in the foregoing with reference to an exemplary embodiment of the hot beverage brewing apparatus of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A hot beverage brewing apparatus (1) comprising a water input (2), a water pump (3) connected to the water input (2) and provided with a first control loop for controlling a flow generated by the water pump (3), a thermal heater (7) connected to the water pump (3) and provided with a second control loop for controlling the heating by the thermal heater (7) of the water supplied by the water pump (3), and a brewer unit (11) connected to the thermal heater (7) with a first outlet (12) for the hot beverage, **characterized in that** the thermal heater (7) is provided with a second outlet (13) for steam (14), and that the first control loop for controlling the flow generated by the water pump (3) comprises a zero cross detection circuit (15) connected to a power input line (16) of a power circuit (17) which provides power to the water pump (3) to detect and select one of the two halves (18) of a power cycle (19) present on the power line (16), said control loop further comprising a driving circuit (20) cooperating with the zero cross detection circuit (15), and said control loop further comprising a switch (21) in the power circuit (17) of the water pump (3), which switch (21) is driven by the driving circuit (20) and which is arranged to repetitiously switch the switch (21) on and off so as to provide a predefined percentage of the power available on the powerline (16) in the selected half (18) of the power cycle (19) to the water pump (3), wherein the driving circuit (20) is arranged to maintain the switch (21) in the on position for a selected period of time in the non-selected half of the power cycle (19) present on the powerline (16), so as to enable that in said second half electrical current through the water pump (3) restores to zero.

## Patentansprüche

1. Heißgetränkebrühvorrichtung (1), umfassend einen Wassereingang (2), eine Wasserpumpe (3), die mit dem Wassereingang (2) verbunden ist und mit einem ersten Steuerkreis zur Steuerung eines von der Wasserpumpe (3) erzeugten Flusses versehen ist, einen thermischen Erhitzer (7), der mit der Wasserpumpe (3) verbunden ist und mit einem zweiten Steuerkreis zur Steuerung des Erhitzens des von der Wasserpumpe (3) zugeführten Wassers durch den thermischen Erhitzer (7) versehen ist, und eine Brüheinheit (11), die mit dem thermischen Erhitzer (7) verbunden ist und einen ersten Auslass (12) für das Heißgetränk aufweist,
**dadurch gekennzeichnet, dass**
der thermische Erhitzer (7) mit einem zweiten Auslass (13) für Dampf (14) versehen ist, und dass der erste Steuerkreis zur Steuerung des von der Wasserpumpe (3) erzeugten Flusses eine Nulldurchgangs-Erfassungsschaltung (15) umfasst, die mit einer Stromeingangsleitung (16) eines Stromkreises (17) verbunden ist, der die Wasserpumpe (3) mit Strom versorgt, um eine der beiden Hälften (18) eines auf der Stromleitung (16) vorhandenen Stromzyklus (19) zu erfassen und auszuwählen, wobei der Steuerkreis ferner eine Treiberschaltung (20) umfasst, die mit der Nulldurchgangs-Erfassungsschaltung (15) zusammenwirkt, und der Steuerkreis ferner einen Schalter (21) im Stromkreis (17) der Wasserpumpe (3) umfasst, wobei der Schalter (21) von der Treiberschaltung (20) angesteuert wird und so angeordnet ist, dass sie den Schalter (21) wiederholt ein- und ausschaltet, um der Wasserpumpe (3) einen vordefinierten Prozentsatz der auf der Stromleitung (16) in der ausgewählten Hälfte (18) des Stromzyklus (19) verfügbaren Leistung zuzuführen, wobei die Treiberschaltung (20) so angeordnet ist, dass sie den Schalter (21) für eine ausgewählte Zeitspanne in der nicht ausgewählten Hälfte des auf der Stromleitung (16) vorhandenen Stromzyklus (19) in der eingeschalteten Position hält, um zu ermöglichen, dass in der zweiten Hälfte elektrischer Strom durch die Wasserpumpe (3) auf Null zurückkehrt.

## Revendications

1. Appareil d'infusion de boisson chaude (1) comprenant une entrée d'eau (2), une pompe à eau (3) reliée à l'entrée d'eau (2) et dotée d'une première boucle de commande pour commander un écoulement généré par la pompe à eau (3), un élément chauffant thermique (7) relié à la pompe à eau (3) et doté d'une deuxième boucle de commande pour commander le chauffage par l'élément chauffant thermique (7) de l'eau fournie par la pompe à eau (3), et une unité d'infusion (11) reliée à l'élément chauffant thermique (7) avec une première sortie (12) pour la boisson chaude, **caractérisé en ce que** l'élément chauffant thermique (7) est pourvu d'une deuxième sortie (13) pour de la vapeur (14), et **en ce que** la première boucle de commande pour commander l'écoulement généré par la pompe à eau (3) comprend un circuit de détection de passage à zéro (15) relié à une ligne d'entrée d'énergie (16) d'un circuit d'énergie (17) qui fournit de l'énergie à la pompe à eau (3) pour détecter et sélectionner l'une des deux moitiés (18) d'un cycle d'énergie (19) présent sur la ligne d'énergie (16), ladite boucle de commande comprenant en outre un circuit d'entraînement (20) coopérant avec le circuit de détection de passage à zéro (15), et ladite boucle de commande comprenant en outre un commutateur (21) dans le circuit d'énergie (17) de la pompe à eau (3), lequel commutateur (21) est entraîné par le circuit d'entraînement (20) et est agencé pour commuter répétitivement l'activation et la désactivation du commutateur (21) afin de fournir un pourcentage prédéfini de l'énergie disponible sur la ligne d'énergie (16) dans la moitié (18) sélectionnée du cycle d'énergie (19) à la pompe à eau (3), dans lequel le circuit d'entraînement (20) est agencé pour maintenir le commutateur (21) à la position d'activation pendant une période de temps sélectionnée dans la moitié non sélectionnée du cycle d'énergie (19) présent sur la ligne d'énergie (16) afin de permettre que, dans ladite deuxième moitié, un courant électrique traversant la pompe à eau (3) revienne à zéro.
